# EUROPÄISCHE PATENTSCHRIFT

(11) **EP 2 918 524 B1**
(45) Veröffentlichungstag und Bekanntmachung des Hinweises auf die Patenterteilung: **26.04.2017**
(21) Anmeldenummer: 15158902.5
(22) Anmeldetag: 12.03.2015
(51) Int. Cl.: B65G 57/03, B65G 59/02

(54) **ANORDNUNG ZUM MANUELLEN ENTSTAPELN UND/ODER STAPELN VON WAREN**
ASSEMBLY FOR THE MANUAL UNSTACKING AND/OR STACKING OF GOODS
SYSTÈME DESTINÉ À DÉSEMPILER MANUELLEMENT ET/OU À EMPILER DES MARCHANDISES

(30) Priorität: 13.03.2014 DE 102014103413
(43) Veröffentlichungstag der Anmeldung: 16.09.2015
(73) Patentinhaber: BSS Bohnenberg GmbH, 42697 Solingen (DE)
(72) Erfinder: Bohnenberg, Harald, 40567 Düsseldorf (DE); Gräb, Martin, 58239 Schwerte (DE)
(74) Vertreter: Grape & Schwarzensteiner

(56) Entgegenhaltungen:
- EP-A1- 2 247 517
- EP-A1- 2 392 523
- WO-A1-2012/085271
- US-A1- 2009 136 328

## Beschreibung

Die vorliegende Erfindung betrifft eine Anordnung zum manuellen Entstapeln und/oder Stapeln von Waren, insbesondere von quaderförmigen Stückgütern wie Behältern, Kartons oder (Getränke-)Kisten.

Anordnungen zum automatischen Entstapeln und/oder Stapeln von Waren bzw. Kolli sind allgemein bekannt. Beispielsweise ist aus der EP 2 332 865 A1 eine solche Anordnung bekannt. Diese Anordnung besteht aus einem wareneingangsseitigen Ende zum Aufnehmen von mit den Waren bestückten Sammelladungsträgern, wie zum Beispiel Paletten, bzw. aus einem warenausgangsseitigen Ende zum Abgeben von mit den Waren bestückten Sammelladungsträgern. Das wareneingangsseitige bzw. warenausgangsseitige Ende ist in Form eines horizontalen Förderers ausgestaltet. Darüber hinaus weist diese Anordnung eine dem wareneingangsseitigen Ende nachgeordnete bzw. dem warenausgangsseitigen Ende vorgeordnete, vertikal oder im Wesentlichen vertikal verlaufende Transportbahn auf, über welche die mit den Waren bestückten Sammelladungsträger vertikal nach oben bzw. nach unten bewegbar sind. Ferner umfasst diese Anordnung eine Abnahmeeinheit, welche die oberste Lage von Waren abnimmt und an einen Abförderer zur Weiterbeförderung übergibt, ohne offenbar eine Vereinzelung der Waren vorzunehmen. Diese Anordnung hat sich in der Praxis allerdings darüber hinaus auch aus einem noch ganz anderen Grund, nämlich aufgrund einer rein automatischen Betriebsweise, als verhältnismäßig nachteilig erwiesen. So kann das Entstapeln von mit Waren beladenen Sammelladungsträgern ausschließlich dadurch erfolgen, dass eine Lage von Waren insgesamt, d.h. die gesamte Lage mit sämtlichen sich in dieser Lage der Sammelladungsträger befindlichen Waren gleichzeitig, entstapelt wird. Eine Vereinzelung oder Separierung von den Waren individuell aus der Lage selbst ist ausgeschlossen. Solche Entstapelungsvorrichtungen sind daher ausschließlich zum "Entstapeln" der Waren verwendbar, sind aber ungeeignet für individuelle Handhabungen wie "Vereinzeln" und "Drehen" der Waren. Hierzu bedarf es vielmehr gesonderter, nachfolgender Arbeitsgänge und/oder konstruktiver Maßnahmen. Grundsätzlich ist der Warendurchsatz eines automatisch betriebenen Entstapelplatzes und/oder Stapelplatzes im Idealfall gegenüber einem manuellen Entstapelplatz und/oder Stapelplatz größer und für das Bedienungspersonal weniger körperbeanspruchend sowie damit gesundheitsschonender. Dies setzt allerdings einen absolut störungsfreien Ablauf voraus. Mithin dürfen etwa die Waren nicht, auch nicht geringfügig, zueinander verschoben bzw. versetzt sein, müssen die Waren einer jeden Lage eine identische Höhe aufweisen, etc. In der Praxis lässt sich ein absolut störungsfreier Ablauf jedoch nicht realisieren, was häufig zu Unterbrechungen des Warenflusses führen kann, in welchen die Waren vom Bedienungspersonal manuell ausgerichtet oder Wartungs- oder Instandsetzungsarbeiten an dem Entstapelplatz vorgenommen müssen usw. Eine durch einen automatischen Betrieb möglicherweise zu erzielende Zeit- und/oder Kostenersparnis wird damit aufgehoben, oftmals sogar in das Gegenteil verkehrt. Aus diesem Grunde kommt ein manueller Entstapelplatz und/oder Stapelplatz oftmals bevorzugt zum Einsatz. Ein manueller Entstapelplatz und/oder Stapelplatz besitzt aber seinerseits erhebliche Nachteile in der Praxis. Zum einen ist der zu erreichende Warendurchsatz in aller Regel begrenzt. Zum anderen schreiben gesetzliche nationale wie europäische Arbeitsverordnungen genau vor, welchen Belastungen das Bedienungspersonal zeitlich, aber gleichermaßen körperlich ausgesetzt werden darf, welche Ruhepausen zu beachten sind, etc. Beides gestaltet sich besonders betriebs- sowie personalkostenintensiv und damit ausgesprochen kostenaufwendig.

Aus der DE US 2009/0136328 A1 bzw. der prioritätsbegründenden DE 10 2006 025 619 A1 sind eine regal-integrierte Packstation und ein dazugehöriges Kommissionierverfahren mit einer Vielzahl von um einen Arbeitsplatz herum angeordneten, feststehenden und vertikal verlaufenden Transportbahnen beschrieben. Die EP 2 247 517 B1 offenbart eine Anordnung zum manuellen Stapeln von Waren, umfassend ein warenausgangsseitiges Ende zum Abgeben von mit den Waren bestückten Sammelladungsträgem, eine dem warenausgangsseitigen Ende vorgeordnete, vertikal oder im Wesentlichen vertikal verlaufende Transportbahn, über welche die mit den Waren bestückten Sammelladungsträger vertikal nach unten bewegbar sind, eine der vertikal oder im Wesentlichen vertikal verlaufenden Transportbahn vorgeordnete Brückenfördereinrichtung, von welcher die zu bestückenden Waren übernehmbar sind, wobei die Brückenfördereinrichtung senkrecht zum Warenfluss der Waren auf der Brückenfördereinrichtung hin- und herbewegbar ist, eine der Brückenfördereinrichtung vorgeordnete, parallel zum Warenfluss der Waren auf der Brückenfördereinrichtung angeordnete und horizontal oder im Wesentlichen horizontal verlaufende Transportbahn, von welchen die zu bestückenden Waren senkrecht zu der Richtung der Hin- und Herbewegung der Brückenfördereinrichtung zu der Brückenfördereinrichtung bewegbar und auf die Brückenfördereinrichtung übergebbar sind, wobei die Auflägeflächen der Sammelladungsträger oder die Oberseite der Waren der unmittelbar unter der obersten Lage befindlichen Lage der Waren und die Auflägeflächen der Brückenfördereinrichtung zumindest mit einem der vertikal verlaufenden Transportbahn zugeordneten Ende in einer Ebene zusammenfallen, derart, dass die Waren von der Auflagefläche der Brückenfördereinrichtung auf die Auflageflächen der Sammelladungsträger oder auf die Oberseite der obersten Lage der Waren von der Brückenfördereinrichtung zugeordneten Bedienungsperson manuell verschiebbar sind. Der vorliegenden Erfindung liegt daher die Aufgabe zugrunde, eine Anordnung zum manuellen Entstapeln und/oder Stapeln von Waren bzw. Kolli zur Verfügung zu stellen, welche konstruktiv besonders einfach und kompakt ausgestaltet ist, einen zuverlässigen Betrieb ermöglicht und zugleich ein hohes Leistungsvermögen bei der Warenumschlagung aufweist.
Diese Aufgabe wird auf überraschend einfache Weise durch die Merkmale des Anspruchs 1 gelöst.
Durch die Ausgestaltung der erfindungsgemäßen Anordnung zum manuellen Entstapeln von Waren, insbesondere von quaderförmigen Stückgütern wie Behältern, Kartons oder (Getränke-) Kisten, umfassend ein wareneingangsseitiges Ende zum Aufnehmen von mit den Waren bestückten Sammelladungsträgern, wenigstens zwei dem wareneingangsseitigen Ende nachgeordnete, vertikal oder im Wesentlichen vertikal verlaufende Transportbahnen, über welche die mit den Waren bestückten Sammelladungsträger vertikal nach oben bewegbar sind, mindestens zwei den wenigstens zwei vertikal oder im Wesentlichen vertikal verlaufenden Transportbahnen nachgeordnete Brückenfördereinrichtungen, auf welche die vereinzelten Waren übergebbar sind, wobei die mindestens zwei Brückenfördereinrichtungen auf einander gegenüberliegenden Seiten der wenigstens zwei vertikalen Transportbahnen angeordnet und zwischen den einander entsprechend gleichen Seiten der wenigstens zwei vertikalen Transportbahnen über die gesamte Breite der Seiten der wenigstens zwei vertikalen Transportbahnen senkrecht zum Warenfluss der Waren auf den mindestens zwei Brückenfördereinrichtungen hin- und herbewegbar sind, zwei den Brückenfördereinrichtungen nachgeordnete, senkrecht zum Warenfluss der Waren auf den zwei Brückenfördereinrichtungen angeordnete und horizontal oder im Wesentlichen horizontal verlaufende Transportbahnen, an welche die vereinzelten Waren übergebbar und parallel zu der Richtung der Hin- und Herbewegung der zwei Brückenfördereinrichtungen zu einem Ende der zwei horizontalen Transportbahnen bewegbar sowie von dort weiterbeförderbar sind, wobei die Auflageflächen der Sammelladungsträger oder die Oberseite der Waren der unmittelbar unter der obersten Lage befindlichen Lage der Waren und die Auflageflächen der mindestens zwei Brückenfördereinrichtungen zumindest mit einem den wenigstens zwei vertikal verlaufenden Transportbahnen zugeordneten Ende in einer Ebene zusammenfallen, derart, dass die Waren von der Oberseite der obersten Lage der Waren oder von den Auflageflächen der Sammelladungsträger auf die Auflageflächen der mindestens zwei Brückenfördereinrichtungen von einer jeder der zwei Brückenfördereinrichtungen zugeordneten Bedienperson manuell verschiebbar sind, wird eine besonders einfache, zudem ausgesprochen kompakte Bauweise der Anordnung erreicht. Gegenüber manuellen und/oder automatischen Entstapelplätzen weist die Anordnung nach der Erfindung erhebliche Vorteile auf. Demnach besitzt die erfindungsgemäße Anordnung eine hohe Funktions- und Betriebssicherheit und führt insbesondere zu einer optimalen Auslastung und gleichzeitig einem wesentlich verbesserten Leistungsvermögen bei der Warenumschlagung selbst, und zwar unter erheblicher Reduzierung der Betriebs- sowie Personalkosten. Die manuell betreibbaren Entstapelplätze sind erfindungsgemäß jeweils zwischen zwei vertikal oder im Wesentlichen vertikal verlaufenden Transportbahnen, über welche die mit Waren bestückten Sammelladungsträger vertikal nach oben bewegbar sind, angeordnet. Auf diese Weise lässt sich der Warendurchsatz eines manuellen Entstapelplatzes wesentlich erhöhen, da während des Vereinzelns von Waren von einem (ersten) Sammelladungsträger bereits ein weiterer (zweiter) Sammelladungsträger vorbereitet und durch die weitere vertikal verlaufende Transportbahn parallel soweit nach oben bewegt werden kann, so dass das Bedienungspersonal nach dem Vereinzeln der Waren der untersten Lage des (ersten) Sammelladungsträgers zeitlich nahezu übergangslos mit dem Vereinzeln von Waren der obersten Lage des weiteren (zweiten) Sammelladungsträgers fortfahren kann. Des Weiteren erfolgt die Vereinzelung der Waren bei der erfindungsgemäßen Anordnung zum Beispiel lagenweise oder - bei nicht in Lagen gestapelten Sammelladungsträgern - Kollo für Kollo. Dabei werden die Waren der jeweils obersten Lage der Sammelladungsträger auf horizontal oder im Wesentlichen horizontal verlaufende Transportbahnen verbracht. Die Unterseite der Waren der obersten Lage der Waren und die Auflageflächen der Sammelladungsträger bzw. die Oberseite der Waren der unmittelbar unter der obersten Lage befindlichen Lage der Waren und die Auflageflächen der zwei Brückenfördereinrichtungen fallen zumindest mit einem den wenigstens zwei vertikal verlaufenden Transportbahnen zugeordneten Ende in einer Ebene zusammen, so dass die Waren nur zu verschieben sind. Das Bedienungspersonal ist somit in die Lage versetzt, die Waren einfach und schnell von einem Sammelladungsträger zu vereinzelnen, ohne die Waren selbst heben, zu tragen oder sonstwie handhaben bzw. selbst gehen oder sich bücken zu müssen. Durch gegenseitige zeitliche Abstimmung der Hubgeschwindigkeit bzw. des Hubtaktes zwischen der vertikal oder im Wesentlichen vertikal verlaufenden Transportbahn, welche dem jeweiligen Entstapelplatz vorgeordnet ist, und der von dem Bedienungspersonal benötigten Zeit zum Vereinzeln einer Lage von Waren müssen die Waren nur mehr durch horizontales Verschieben weiterbewegt werden. Es entfällt bei einer manuellen Entstapelung der Waren damit in vorteilhafter Weise jegliche bisherige gewichtsmäßige und damit körperliche sowie gesundheitsschädliche Beanspruchung des Bedienungspersonals. Ebenso kann im Zuge der Entstapelung der Waren dem einzelnen Kollo eine bevorzugte, individuelle Orientierung (zum Beispiel längs oder quer) gegebenen werden. Insofern können die verschiedenen Vorgänge "Entstapeln", "Vereinzeln" und "Drehen" der Waren in einem einzigen Arbeitsgang erfolgen. Die erfindungsgemäße Anordnung besitzt darüber hinaus gegenüber bekannten automatischen Entstapelungsvorrichtungen, insbesondere Lagendepalettierern etc., erhebliche weitere Vorteile. So kann das Entstapeln von mit Waren befüllten Sammelladungsträgern bei der erfindungsgemäßen Anordnung dadurch erfolgen, dass die Waren nacheinander und einzeln oder weitgehend vereinzelt sowie separat entstapelt werden, unabhängig davon, ob sie in Lagen angeordnet sind oder nicht. Nicht zuletzt deshalb benötigen andere Entstapelungsvorrichtungen für die verschiedenen Vorgänge "Entstapeln", "Vereinzeln" und "Drehen" der Waren, jeweils separate und folglich mehrere, d.h. drei einzelne, aufeinanderfolgende Arbeitsgänge und sind darauf angewiesen, dass die Waren in Lagen angeordnet sind.

In diesem Zusammenhang ist es von besonderem Vorteil, dass gemäß Anspruch 2 die Auflageflächen der Sammelladungsträger oder die Oberseite der Waren der unmittelbar unter der obersten Lage befindlichen Lage der Waren, die Auflageflächen der zwei Brückenfördereinrichtungen und die Auflageflächen der zwei horizontalen Transportbahnen in einer, insbesondere horizontalen, Ebene zusammenfallen, derart, dass die Waren von der Oberseite der obersten Lage der Waren oder von den Auflageflächen der Sammelladungsträger über die Auflageflächen der mindestens zwei Brückenfördereinrichtungen auf die Auflageflächen der zwei horizontalen Transportbahnen von einer jeder der zwei Brückenfördereinrichtungen zugeordneten Bedienungsperson manuell verschiebbar sind.

Diese Aufgabe wird weiterhin auf ebenso überraschend einfache Weise durch die Merkmale des Anspruchs 3 gelöst.

Durch die Ausgestaltung der erfindungsgemäßen Anordnung zum manuellen Stapeln von Waren, insbesondere von quaderförmigen Stückgütern wie Behältern, Kartons oder (Getränke-)Kisten, umfassend ein warenausgangsseitiges Ende zum Abgeben von mit den Waren bestückten Sammelladungsträgern, wenigstens zwei dem warenausgangsseitigen Ende vorgeordnete, vertikal oder im Wesentlichen vertikal verlaufende Transportbahnen, über welche die mit den Waren bestückten Sammelladungsträger vertikal nach unten bewegbar sind, mindestens zwei den wenigstens zwei vertikal oder im Wesentlichen vertikal verlaufenden Transportbahnen vorgeordnete Brückenfördereinrichtungen, von welchen die zu bestückenden Waren übernehmbar sind, wobei die mindestens zwei Brückenfördereinrichtungen auf einander gegenüberliegenden Seiten der wenigstens zwei vertikalen Transportbahnen angeordnet und zwischen den einander entsprechend gleichen Seiten der wenigstens zwei vertikalen Transportbahnen über die gesamte Breite der Seiten der wenigstens zwei vertikalen Transportbahnen senkrecht zum Warenfluss der Waren auf den mindestens zwei Brückenfördereinrichtungen hin- und herbewegbar sind, zwei den Brückenfördereinrichtungen vorgeordnete, senkrecht zum Warenfluss der Waren auf den zwei Brückenfördereinrichtungen angeordnete und horizontal oder im Wesentlichen horizontal verlaufende Transportbahnen, von welchen die zu bestückenden Waren parallel zu der Richtung der Hin- und Herbewegung der zwei Brückenfördereinrichtungen zu den mindestens zwei Brückenfördereinrichtungen bewegbar und auf die Brückenfördereinrichtungen übergebbar sind, wobei die Auflageflächen der Sammelladungsträger oder die Oberseite der Waren der unmittelbar unter der obersten Lage befindlichen Lage der Waren und die Auflageflächen der mindestens zwei Brückenfördereinrichtungen zumindest mit einem den wenigstens zwei vertikal verlaufenden Transportbahnen zugeordneten Ende in einer Ebene zusammenfallen, derart, dass die Waren von den Auflageflächen der mindestens zwei Brückenfördereinrichtungen auf die Auflageflächen der Sammelladungsträger oder auf die Oberseite der obersten Lage der Waren von einer jeder der zwei Brückenfördereinrichtungen zugeordneten Bedienungsperson manuell verschiebbar sind, lassen sich die gleichen Vorteile wie bei der Anordnung zum manuellen Entstapeln erreichen, nur mit dem Unterschied einer Richtungsumkehr des Warenflusses.

In diesem Zusammenhang ist es von besonderem Vorteil, dass gemäß Anspruch 4 die Auflageflächen der Sammelladungsträger oder die Oberseite der Waren der unmittelbar unter der obersten Lage befindlichen Lage der Waren, die Auflageflächen der zwei Brückenfördereinrichtungen und die Auflageflächen der zwei horizontalen Transportbahnen in einer, insbesondere horizontalen, Ebene zusammenfallen, derart, dass die Waren von den Auflageflächen der zwei horizontalen Transportbahnen über die Auflageflächen der mindestens zwei Brückenfördereinrichtungen auf die Oberseite der obersten Lage der Waren oder auf die Auflageflächen der Sammelladungsträgern von einer jeder der zwei Brückenfördereinrichtungen zugeordneten Bedienungsperson manuell verschiebbar sind.

Vorteilhafte konstruktive Einzelheiten der erfindungsgemäßen Anordnung sind in den Ansprüchen 5 bis 12 beschrieben.

Nach Anspruch 5 sind die mindestens zwei Brückenfördereinrichtungen zwischen den entsprechenden Seiten der wenigstens zwei vertikalen Transportbahnen senkrecht zum Warenfluss der Waren manuell hin- und herverschiebbar und/oder motorgetrieben hin- und herbewegbar.

Von großem Interesse für einen störungsfreien Ablauf beim Entstapeln und/oder Stapeln sind die konstruktiven Maßnahmen des Anspruchs 6, wonach die mindestens zwei Brückenfördereinrichtungen und/oder die wenigstens zwei horizontalen Transportbahnen höhenverstellbar ausgebildet sind. Die horizontale Ebene lässt sich auf diese Weise zum Beispiel auf die Höhe der Waren bzw. der Lagen der Waren anpassen.

In vorteilhafter Weise für eine zusätzliche Vereinfachung der von den Bedienungspersonen vorzunehmenden Arbeitsabläufe der erfindungsgemäßen Anordnung insgesamt und einfachen Warenfluss sind die Maßnahmen des Anspruchs 7. Danach ist den mindestens zwei Brückenfördereinrichtungen und den wenigstens zwei horizontalen Transportbahnen ein Boden zugeordnet, der wenigstens teilweise gegenüber den Auflageflächen der mindestens zwei Brückenfördereinrichtungen und der wenigstens zwei Transportbahnen relativ höhenverstellbar ausgebildet ist. Eine solche Höhenverstellbarkeit des Bodens ermöglicht eine individuelle Anpassung der erfindungsgemäßen Anordnung unter ergonomischen Gesichtspunkten.

In diesem Zusammenhang ist erfindungsgemäß nach Anspruch 8 vorgesehen, dass der Boden wenigstens zweigeteilt ausgebildet ist, wobei separate Bodenelemente zueinander relativ höhenverstellbar ausgebildet sind.

Weiter liegt es im Rahmen der Erfindung, dass die mindestens zwei Brückenfördereinrichtungen und/oder die wenigstens zwei horizontalen Transportbahnen nach Anspruch 9 durch Rollen, Röllchen, Kugelrollen oder Allseitenrollen gebildete Auflageflächen aufweisen.

Darüber hinaus ist erfindungsgemäß vorgesehen, dass die mindestens zwei Brückenfördereinrichtungen und/oder die wenigstens zwei horizontalen Transportbahnen nach Anspruch 10 wenigstens teilweise motorgetriebene Auflageflächen umfassen.

Entsprechend Anspruch 11 ist/sind den zwei horizontalen Transportbahnen eine Warenwendungseinrichtung und/oder eine Zentriereinrichtung zur Ausrichtung der Waren für deren Weiterbeförderung zugeordnet.

Schließlich liegt es noch im Rahmen der Erfindung, dass nach Anspruch 12 die Hubgeschwindigkeit oder der Hubtakt der vertikal oder im Wesentlichen vertikal verlaufenden Transportbahnen in Abhängigkeit der Höhe der Lagen der Waren und der Anzahl der Waren einer Lage der Waren eines Sammelladungsträgers einstellbar, insbesondere steuer- oder regelbar, ist.
Weitere Vorteile und Einzelheiten der Erfindung ergeben sich aus der nachfolgenden Beschreibung einer bevorzugten Ausführungsform der Erfindung sowie anhand der Zeichnungen. Hierbei zeigen:
- Fig. 1: eine schematische Seitenansicht einer Ausführungsform einer erfindungsgemäßen Anordnung zum manuellen Entstapeln und/oder Stapeln von Waren, und
- Fig. 2A und 2B: zwei teilweise abgebrochene Draufsichten auf die Ausführungsform der erfindungsgemäßen Anordnung entsprechend der Fig. 1, in zwei verschiedenen Stellungen, in verkleinerter Darstellung.

Bei der nachfolgenden Beschreibung einer Ausführungsform einer erfindungsgemäßen Anordnung 10 zum manuellen Entstapeln und/oder Stapeln von Waren 12 sind einander entsprechende, gleiche Bauteile jeweils mit identischen Bezugsziffern versehen.

Die Anordnung 10 nach der Erfindung ist zum Entstapeln und/oder Stapeln von Waren 12 bzw. Kolli, insbesondere von quaderförmigen Stückgütern wie Behältern, Kartons oder (Getränke-)Kisten, vorgesehen.

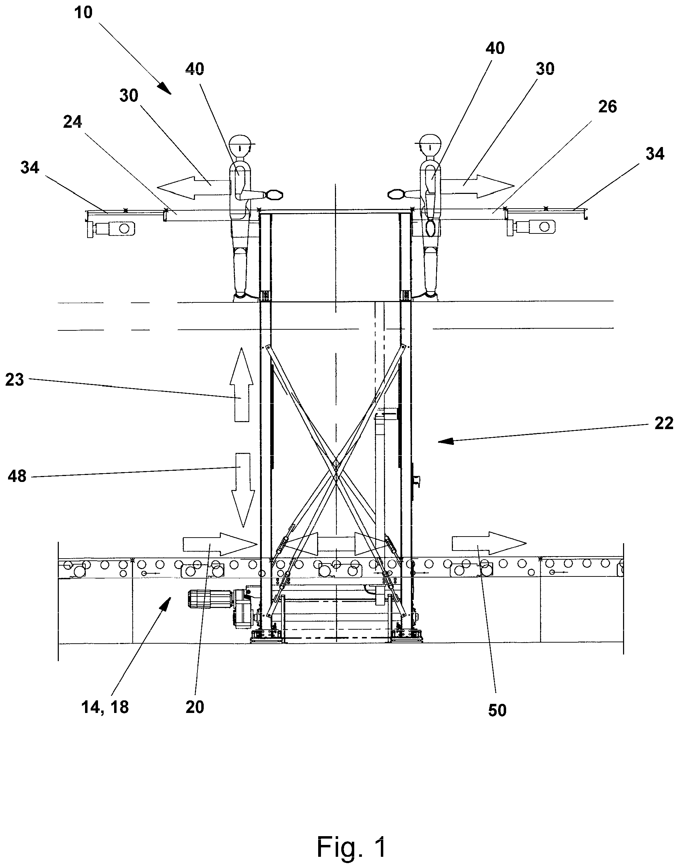

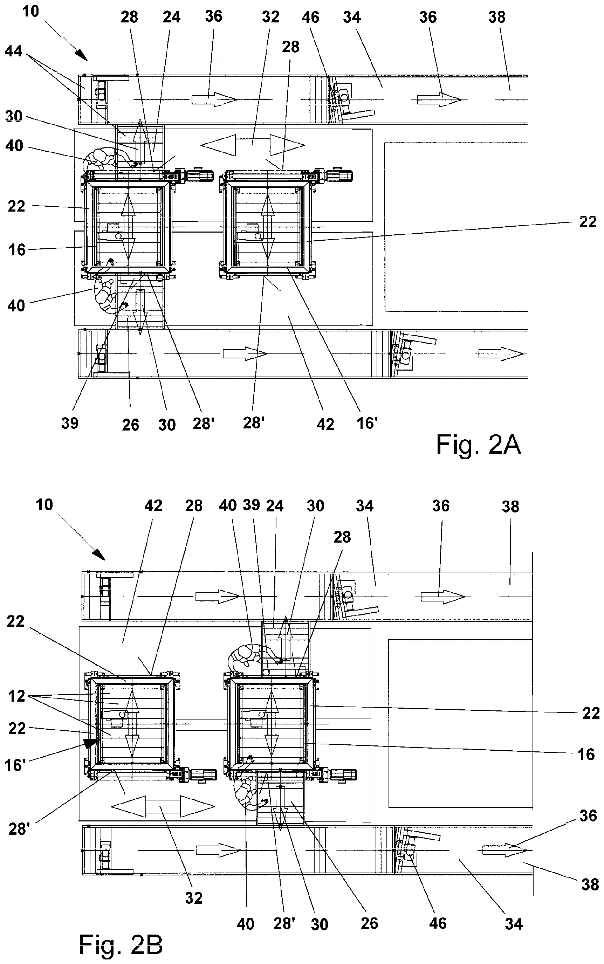

Entsprechend der in den Fig. 1, 2A und 2B gezeigten Ausführungsform umfasst die Anordnung 10 ein wareneingangsseitiges Ende 14 zum Aufnehmen von Sammelladungsträgern 16. Das wareneingangsseitige Ende 14 entspricht einem Wareneingang für sogenannte Artikelsammelträger, die mit jeweils zum Beispiel gleichartigen Waren 12 bestückt sind.

Weiterhin umfasst die Anordnung 10 ein warenausgangsseitiges Ende 18 zum Abgeben von Sammelladungsträgern 16. Das warenausgangsseitige Ende 18 entspricht einem Warenausgang für sogenannte Kundensammelträger, die mit kommissionierten, zum Versand bereitgestellten Waren 12 bestückt sind.

Die Sammelladungsträger 16 können zum Beispiel als Paletten, Rollcontainer oder dergleichen ausgebildet sein.

Das wareneingangsseitige Ende 14 und das warenausgangsseitige Ende 18 sind bei der Ausführungsform entsprechend der Fig. 1 als eine horizontale Transportbahn in Form zum Beispiel eines Rollenförderers ausgebildet.

Darüber hinaus weist die Anordnung 10 nach der Erfindung wenigstens zwei vertikal oder im Wesentlichen vertikal verlaufende Transportbahnen 22 auf. Bei der in den Fig. 1, 2A und 2B dargestellten Ausführungsform der Anordnung 10 sind insgesamt zwei vertikal oder im Wesentlichen vertikal verlaufende Transportbahnen 22 vorgesehen. Die zwei vertikalen Transportbahnen 22 sind dem wareneingangsseitigen Ende 14 somit nachgeordnet und können als lineare Hubfördereinrichtung ausgebildet sein.

Die Sammelladungsträger 16 mit den Waren 12 werden von dem wareneingangsseitigen Ende 14 gemäß Pfeil 20 den wenigstens zwei vertikal oder im Wesentlichen vertikal verlaufenden Transportbahnen 22 zugeführt. Durch die zwei vertikalen Transportbahnen 22 sind die mit den Waren 12 bestückten Sammelladungsträger 16 gemäß Pfeil 23 vertikal nach oben bewegbar.

Wie den Fig. 1, 2A und 2B weiter entnehmbar ist, umfasst die Anordnung 10 nach der Erfindung mindestens zwei Brückenfördereinrichtungen 24, 26. Bei der dargestellten Ausführungsform sind zwei Brückenfördereinrichtungen 24, 26 vorgesehen. Die zwei Brückenfördereinrichtungen 24, 26 sind den zwei vertikal verlaufenden Transportbahnen 22 nachgeordnet, von welchen die Waren 12 aufgenommen werden.

Dabei sind die zwei Brückenfördereinrichtungen 24, 26 auf einander gegenüberliegenden Seiten 28, 28' der zwei vertikalen Transportbahnen 22 angeordnet. Weiterhin sind die zwei Brückenfördereinrichtungen 24, 26 zwischen den einander entsprechend gleichen Seiten 28, 28 bzw. 28', 28' der zwei vertikalen Transportbahnen 22 senkrecht zum Warenfluss der Waren 12 auf den zwei Brückenfördereinrichtungen 24, 26 gemäß Pfeil 30 hin- und herbewegbar. Die Richtung der Hin- und Herbewegung der zwei Brückenfördereinrichtungen 26, 28 ist durch den Doppelpfeil 32 angedeutet.

Des Weiteren umfasst die erfindungsgemäße Anordnung 10 zwei horizontal oder im Wesentlichen horizontal verlaufende Transportbahnen 34. Die horizontalen Transportbahnen 34 sind den Brückenfördereinrichtungen 24, 26 nachgeordnet. Weiter sind die horizontalen Transportbahnen 34 senkrecht zum Warenfluss der Waren 12 auf den zwei Brückenfördereinrichtungen 24, 26 entsprechend Pfeil 30 angeordnet. An die horizontalen Transportbahnen 34 sind die vereinzelten Waren 12 übergebbar und entsprechend Pfeil 36 - parallel zu der Richtung der Hin- und Herbewegung der zwei Brückenfördereinrichtungen gemäß Doppelpfeil 32 - zu einem Ende 38 der zwei Transportbahnen 34 bewegbar sowie von dort zur anderweitigen Behandlung weiterbeförderbar.

Die Auflageflächen der Sammelladungsträger 16 oder die Oberseite der Waren 12 der unmittelbar unter der obersten Lage befindlichen Lage der Waren 12 und die Auflageflächen der zwei Brückenfördereinrichtungen 24, 26 fallen zumindest mit dem einem Ende 39, welches den wenigstens zwei vertikal verlaufenden Transportbahnen 22 zugeordnet ist, in einer Ebene zusammen. In bevorzugter Weise fallen die Auflageflächen der Sammelladungsträger 16 oder die Oberseite der Waren 12 der unmittelbar unter der obersten Lage befindlichen Lage der Waren 12, die Auflageflächen der zwei Brückenfördereinrichtungen 24, 26 und die Auflageflächen der zwei horizontalen Transportbahnen 34 sämtlich in einer Ebene zusammen. Von besonderem Vorteil handelt es sich bei der gemeinsamen Ebene dabei um die horizontale Ebene.

Das Vereinzeln bzw. die Entladung der Waren 12 kann zum Beispiel, aber nicht notwendigerweise, lagenweise und/oder in horizontaler Richtung erfolgen. So werden die Waren 12 der jeweils obersten Lage der Sammelladungsträger 16 auf die Brückenfördereinrichtungen 24, 26 verbracht. Die Unterseite der Waren 12 der obersten Lage der Waren 12 und die Auflageflächen der Sammelladungsträger 16 bzw. die Oberseite der Waren 12 der unmittelbar unter der obersten Lage befindlichen Lage der Waren 12, die zwei Brückenfördereinrichtungen 24, 26 und die Auflageflächen der horizontalen Transportbahnen 34 für die Waren 12 befinden sich dabei bevorzugt in einer gemeinsamen Ebene. Die Waren 12 sind lediglich durch zwei Bedienungspersonen 40, die jeweils einer der zwei Brückenfördereinrichtungen 24, 26 zugeordnet ist, manuell zu verschieben. Das Bedienungspersonal ist somit in die Lage versetzt, die Waren 12 einfach und schnell von einem Sammelladungsträger 16 zu vereinzelnen, ohne die Waren 12 selbst heben, tragen oder sonstwie handhaben bzw. selbst gehen oder sich bücken zu müssen.

Durch gegenseitige zeitliche Abstimmung der Hubgeschwindigkeit bzw. des Hubtaktes zwischen der vertikal verlaufenden Transportbahn 22, welche der jeweiligen Brückenfördereinrichtung 24, 26 vorgeordnet ist, und der von dem Bedienungspersonal benötigten Zeit zum Vereinzeln einer Lage von Waren 12 müssen die Waren 12 nur mehr durch horizontales Verschieben weiterbewegt werden. Es entfällt bei einer manuellen Entstapelung der Waren 12 damit in vorteilhafter Weise jegliche bisherige gewichtsmäßige und damit körperliche sowie gesundheitsschädliche Beanspruchung des Bedienungspersonals.

Die Hubgeschwindigkeit oder der Hubtakt zwischen der jeweiligen vertikal verlaufenden Transportbahn 22 ist in Abhängigkeit der Höhe der Lagen der Waren 12 und der Anzahl der Waren 12 einer Lage der Waren 12 eines Sammelladungsträgers 16 individuell einstellbar, insbesondere steuer- oder regelbar.

In diesem Zusammenhang hat es sich als besonders vorteilhaft erwiesen, die zwei Brückenfördereinrichtungen 24, 26 erfindungsgemäß jeweils zwischen den wenigstens zwei vertikal verlaufenden Transportbahnen 22, über welche die mit den Waren 12 bestückten Sammelladungsträger 16 vertikal nach oben bewegbar sind, hin- und herbewegbar anzuordnen. Auf diese Weise lässt sich der Warendurchsatz der Anordnung 10 zum manuellen Entstapeln wesentlich erhöhen, da während des Vereinzelns von Waren 12 von einem (ersten) Sammelladungsträger 16 bereits ein weiterer (zweiter) Sammelladungsträger 16' vorbereitet und durch die weitere vertikal verlaufende Transportbahn 22 parallel soweit nach oben bewegt werden kann, so dass das Bedienungspersonal nach dem Vereinzeln der Waren 12 der untersten Lage des (ersten) Sammelladungsträgers 16 zeitlich nahezu übergangslos mit dem Vereinzeln von Waren 12 der obersten Lage des weiteren (zweiten) Sammelladungsträgers 16' fortfahren kann, usw.

Es bedarf lediglich eines manuellen Hin- und Herverschiebens der zwei Brückenfördereinrichtungen 24, 26 durch die beiden Bedienungspersonen 40. In alternativer oder kumulativer Ausgestaltung dazu kann ebenso ein Motorantrieb zum Hin- und Herbewegen der Brückenfördereinrichtungen 24, 26 vorgesehen sein.

Die zwei Brückenfördereinrichtungen 24, 26 sind jeweils über die gesamte Breite der Seiten 28, 28' der zwei vertikalen Transportbahnen 22 gemäß Doppelpfeil 32 hin- und herbewegbar sind.

Zusätzlich können die zwei Brückenfördereinrichtungen 24, 26 und/oder die zwei horizontalen Transportbahnen 34, ohne im Einzelnen dargestellt zu sein, im Bereich der vertikalen Transportbahnen 22 höhenverstellbar ausgebildet sein. Auch hierdurch lässt sich eine Höhenanpassung an die Höhe der Waren 12 bzw. die Höhe der Lage der Waren 12 individuell erhalten.

Wie in den Fig. 2A und 2B gezeigt ist, ist den zwei Brückenfördereinrichtungen 24, 26 und den zwei horizontalen Transportbahnen 34 im Bereich der vertikalen Transportbahnen 22 weiter ein Boden 42 zugeordnet. Der Boden 42 ist wenigstens teilweise gegenüber den Auflageflächen der zwei Brückenfördereinrichtungen 24, 26 und der zwei Transportbahnen 34 relativ höhenverstellbar ausgebildet. Bei der in den Fig. 2A und 2B dargestellten Ausführungsform der Anordnung 10 ist der Boden 42 zum Beispiel zweigeteilt ausgebildet. Dabei sind die separaten Bodenelemente des Bodens 42 zueinander relativ höhenverstellbar ausgebildet, wodurch sich die Ergonomie der Anordnung 10 auf die Bedienungspersonen 40 individuell anpassen und somit verbessern lässt.

Die zwei Brückenfördereinrichtungen 24, 26 und/oder die zwei horizontalen Transportbahnen 34 weisen Rollen 44 auf, durch welche deren Auflageflächen gebildet sind. Ohne gezeigt zu sein, können die Auflageflächen jedoch ebenso aus Röllchen, Kugelrollen oder Allseitenrollen gebildet sein. Zudem ist es möglich, entsprechende Auflageflächen mindestens teilweise motorgetrieben auszugestalten.

Wie aus den Fig. 2A und 2B ersichtlich ist, kann den zwei horizontalen Transportbahnen 34 schließlich noch optional eine Warenwendungseinrichtung 46 und/oder eine Zentriereinrichtung (nicht dargestellt) zur Ausrichtung der Waren 12 für deren Weiterbeförderung zugeordnet sein.

Ohne im Einzelnen dargestellt zu sein, lässt sich die erfindungsgemäße Anordnung 10, wie oben ausgeführt, gleichermaßen zum Stapeln von Waren 12 verwenden. Das Bestücken bzw. die Beladung des Sammelladungsträgers 16 mit den Waren 12 kann ebenso zum Beispiel, aber nicht notwendigerweise, lagenweise erfolgen. So werden die Waren 12 von den horizontal verlaufenden Transportbahnen 34 über die mindestens zwei Brückenfördereinrichtungen 24, 26 auf die Sammelladungsträger 16 bzw. die Waren 12 der jeweils obersten Lage der Sammelladungsträger 16 verbracht. Die Unterseite der Waren 12 und die Auflageflächen der horizontalen Transportbahnen 34 für die Waren 12, die Auflageflächen der zwei Brückenfördereinrichtungen 24, 26 und die Auflageflächen der Sammelladungsträger 16 bzw. die Oberseite der Waren 12 der obersten Lage der Waren 12 fallen dabei bevorzugt in einer Ebene zusammen, so dass die Waren 12 durch die jeweils zwei Bedienungspersonen 40 nur zu verschieben sind. Dem Bedienungspersonal ist es damit möglich, einen Sammelladungsträger 16 einfach und schnell mit den Waren 12 zu bestücken bzw. zu beladen, ohne die Waren 12 selbst heben oder sonstwie handhaben zu müssen. Die beladenen Sammelladungsträger 16 werden sodann dem warenausgangsseitigen Ende 18 der Anordnung 10 über die vertikal verlaufenden Transportbahnen 22 gemäß Pfeil 48 nach unten zugeführt und zum warenausgangsseitigen Ende 18 gemäß Pfeil 50 zum Versand weiterbefördert.

## Patentansprüche

1. Anordnung zum manuellen Entstapeln von Waren (12), insbesondere von quaderförmigen Stückgütern wie Behältern, Kartons oder (Getränke-)Kisten, umfassend
ein wareneingangsseitiges Ende (14) zum Aufnehmen von mit den Waren (12) bestückten Sammelladungsträgern (16),
wenigstens zwei dem wareneingangsseitigen Ende (18) nachgeordnete, vertikal oder im Wesentlichen vertikal verlaufende Transportbahnen (22), über welche die mit den Waren (12) bestückten Sammelladungsträger (16) vertikal nach oben bewegbar sind,
mindestens zwei den wenigstens zwei vertikal oder im Wesentlichen vertikal verlaufenden Transportbahnen (22) nachgeordnete Brückenfördereinrichtungen (24, 26), auf welche die vereinzelten Waren (12) übergebbar sind, wobei die mindestens zwei Brückenfördereinrichtungen (24, 26) auf einander gegenüberliegenden Seiten (28, 28') der wenigstens zwei vertikalen Transportbahnen (22) angeordnet und zwischen den einander entsprechend gleichen Seiten (28, 28') der wenigstens zwei vertikalen Transportbahnen (22) über die gesamte Breite der Seiten (28, 28') der wenigstens zwei vertikalen Transportbahnen (22) senkrecht zum Warenfluss der Waren (12) auf den mindestens zwei Brückenfördereinrichtungen (24, 26) hin- und herbewegbar sind,
zwei den Brückenfördereinrichtungen (24, 26) nachgeordnete, senkrecht zum Warenfluss der Waren (12) auf den zwei Brückenfördereinrichtungen (24, 26) angeordnete und horizontal oder im Wesentlichen horizontal verlaufende Transportbahnen (34), an welche die vereinzelten Waren (12) übergebbar und parallel zu der Richtung der Hin- und Herbewegung der zwei Brückenfördereinrichtungen (24, 26) zu einem Ende (38) der zwei horizontalen Transportbahnen (34) bewegbar sowie von dort weiterbeförderbar sind,
wobei die Auflageflächen der Sammelladungsträger (16) oder die Oberseite der Waren (12) der unmittelbar unter der obersten Lage befindlichen Lage der Waren (12) und die Auflageflächen der mindestens zwei Brückenfördereinrichtungen (24, 26) zumindest mit einem den wenigstens zwei vertikal verlaufenden Transportbahnen (22) zugeordneten Ende (39) in einer Ebene zusammenfallen, derart, dass die Waren (12) von der Oberseite der obersten Lage der Waren (12) oder von den Auflageflächen der Sammelladungsträger (16) auf die Auflageflächen der mindestens zwei Brückenfördereinrichtungen (24, 26) von einer jeder der zwei Brückenfördereinrichtungen (24, 26) zugeordneten Bedienungsperson (40) manuell verschiebbar sind.

2. Anordnung nach Anspruch 1, **dadurch gekennzeichnet, dass** die Auflageflächen der Sammelladungsträger (16) oder die Oberseite der Waren (12) der unmittelbar unter der obersten Lage befindlichen Lage der Waren (12), die Auflageflächen der zwei Brückenfördereinrichtungen (24, 26) und die Auflageflächen der zwei horizontalen Transportbahnen (34) in einer, insbesondere horizontalen, Ebene zusammenfallen, derart, dass die Waren (12) von der Oberseite der obersten Lage der Waren (12) oder von den Auflageflächen der Sammelladungsträger (16) über die Auflageflächen der mindestens zwei Brückenfördereinrichtungen (24, 26) auf die Auflageflächen der zwei horizontalen Transportbahnen (34) von einer jeder der zwei Brückenfördereinrichtungen (24, 26) zugeordneten Bedienungsperson (40) manuell verschiebbar sind.

3. Anordnung zum manuellen Stapeln von Waren (12), insbesondere von quaderförmigen Stückgütern wie Behältern, Kartons oder (Getränke-)Kisten, umfassend
ein warenausgangsseitiges Ende (18) zum Abgeben von mit den Waren (12) bestückten Sammelladungsträgern (16), wenigstens zwei dem warenausgangsseitigen Ende (18) vorgeordnete, vertikal oder im Wesentlichen vertikal verlaufende Transportbahnen (22), über welche die mit den Waren (12) bestückten Sammelladungsträger (16) vertikal nach unten bewegbar sind,
mindestens zwei den wenigstens zwei vertikal oder im Wesentlichen vertikal verlaufenden Transportbahnen (22) vorgeordnete Brückenfördereinrichtungen (24, 26), von welchen die zu bestückenden Waren (12) übernehmbar sind, wobei die mindestens zwei Brückenfördereinrichtungen (24, 26) auf einander gegenüberliegenden Seiten (28, 28') der wenigstens zwei vertikalen Transportbahnen (22) angeordnet und zwischen den einander entsprechend gleichen Seiten (28, 28') der wenigstens zwei vertikalen Transportbahnen (22) über die gesamte Breite der Seiten (28, 28') der wenigstens zwei vertikalen Transportbahnen (22) senkrecht zum Warenfluss der Waren (12) auf den mindestens zwei Brückenfördereinrichtungen (24, 26) hin- und herbewegbar sind,
zwei den Brückenfördereinrichtungen (24, 26) vorgeordnete, senkrecht zum Warenfluss der Waren (12) auf den zwei Brückenfördereinrichtungen (24, 26) angeordnete und horizontal oder im Wesentlichen horizontal verlaufende Transportbahnen (34), von welchen die zu bestückenden Waren (12) parallel zu der Richtung der Hin- und Herbewegung der zwei Brückenfördereinrichtungen (24, 26) zu den mindestens zwei Brückenfördereinrichtungen (24, 26) bewegbar und auf die Brückenfördereinrichtungen (24, 26) übergebbar sind,
wobei die Auflageflächen der Sammelladungsträger (16) oder die Oberseite der Waren (12) der unmittelbar unter der obersten Lage befindlichen Lage der Waren (12) und die Auflageflächen der mindestens zwei Brückenfördereinrichtungen (24, 26) zumindest mit einem den wenigstens zwei vertikal verlaufenden Transportbahnen (22) zugeordneten Ende (39) in einer Ebene zusammenfallen, derart, dass die Waren (12) von den Auflageflächen der mindestens zwei Brückenfördereinrichtungen (24, 26) auf die Auflageflächen der Sammelladungsträger (16) oder auf die Oberseite der obersten Lage der Waren (12) von einer jeder der zwei Brückenfördereinrichtungen (24, 26) zugeordneten Bedienungsperson (40) manuell verschiebbar sind.

4. Anordnung nach Anspruch 3, **dadurch gekennzeichnet, dass** die Auflageflächen der Sammelladungsträger (16) oder die Oberseite der Waren (12) der unmittelbar unter der obersten Lage befindlichen Lage der Waren (12), die Auflageflächen der zwei Brückenfördereinrichtungen (24, 26) und die Auflageflächen der zwei horizontalen Transportbahnen (34) in einer, insbesondere horizontalen, Ebene zusammenfallen, derart, dass die Waren (12) von den Auflageflächen der zwei horizontalen Transportbahnen (34) über die Auflageflächen der mindestens zwei Brückenfördereinrichtungen (24, 26) auf die Auflageflächen der Sammelladungsträgern (16) oder auf die Oberseite der obersten Lage der Waren (12) von einer jeder der zwei Brückenfördereinrichtungen (24, 26) zugeordneten Bedienungsperson (40) manuell verschiebbar sind.

5. Anordnung nach einem der Ansprüche 1 bis 4, **dadurch gekennzeichnet, dass** die mindestens zwei Brückenfördereinrichtungen (24, 26) zwischen den entsprechenden Seiten (28, 28') der wenigstens zwei vertikalen Transportbahnen (22) senkrecht zum Warenfluss der Waren (12) manuell hin- und herverschiebbar und/oder motorgetrieben hin- und herbewegbar sind.

6. Anordnung nach einem der Ansprüche 1 bis 5, **dadurch gekennzeichnet, dass** die mindestens zwei Brückenfördereinrichtungen (24, 26) und/oder die wenigstens zwei horizontalen Transportbahnen (34) höhenverstellbar ausgebildet sind.

7. Anordnung nach einem der Ansprüche 1 bis 6, **dadurch gekennzeichnet, dass** den mindestens zwei Brückenfördereinrichtungen (24, 26) und den wenigstens zwei horizontalen Transportbahnen (34) ein Boden (42) zugeordnet ist, der wenigstens teilweise gegenüber den Auflageflächen der mindestens zwei Brückenfördereinrichtungen (24, 26) und der wenigstens zwei Transportbahnen (34) relativ höhenverstellbar ausgebildet ist.

8. Anordnung nach Anspruch 7, **dadurch gekennzeichnet, dass** der Boden (42) wenigstens zweigeteilt ausgebildet ist, wobei separate Bodenelemente zueinander relativ höhenverstellbar ausgebildet sind.

9. Anordnung nach einem der Ansprüche 1 bis 8, **dadurch gekennzeichnet, dass** die mindestens zwei Brückenfördereinrichtungen (24, 26) und/oder die wenigstens zwei horizontalen Transportbahnen (34) durch Rollen (44), Röllchen, Kugelrollen oder Allseitenrollen gebildete Auflageflächen aufweisen.

10. Anordnung nach einem der Ansprüche 1 bis 9, **dadurch gekennzeichnet, dass** die mindestens zwei Brückenfördereinrichtungen (24, 26) und/oder die wenigstens zwei horizontalen Transportbahnen (34) wenigstens teilweise motorgetriebene Auflageflächen umfassen.

11. Anordnung nach einem der Ansprüche 1 bis 10, **dadurch gekennzeichnet, dass** den zwei horizontalen Transportbahnen (34) eine Warenwendungseinrichtung (46) und/oder eine Zentriereinrichtung zur Ausrichtung der Waren (12) für deren Weiterbeförderung zugeordnet ist/sind.

12. Anordnung nach einem der Ansprüche 1 bis 11, **dadurch gekennzeichnet, dass** die Hubgeschwindigkeit oder der Hubtakt der vertikal oder im Wesentlichen vertikal verlaufenden Transportbahnen (22) in Abhängigkeit der Höhe der Lagen der Waren (12) und der Anzahl der Waren (12) einer Lage der Waren (12) eines Sammelladungsträgers (16) einstellbar, insbesondere steuer- oder regelbar, ist.

## Claims

1. Arrangement for the manual unstacking of goods (12), in particular of cuboid piece goods such as containers, boxes or (beverage) crates, comprising
an incoming goods end (14) to receive collective load carriers (16) loaded with the goods (12);
at least two vertical or essentially vertically running transport lines (22), which are downstream of the incoming goods end (18), along which the collective load carriers (16) loaded with the goods (12) can be moved vertically upwards;
at least two bridge conveyor systems (24, 26), which are downstream of the at least two vertical or essentially vertically running transport lines (22), onto which the individual goods (12) can be passed on, wherein the at least two bridge conveyor systems (24, 26) are arranged on opposite sides (28, 28') of the at least two vertical transport lines (22) and can be moved back and forth on the at least two bridge conveyor systems (24, 26) between the corresponding same sides (28, 28') of the at least two vertical transport lines (22) across the full width of the sides (28, 28') of the at least two vertical transport lines (22) perpendicularly to the flow of the goods (12);
two horizontal or essentially horizontally running transport lines (34), which are downstream of the bridge conveyor systems (24, 26) and arranged perpendicularly to the flow of the goods (12) on the two bridge conveyor systems (24, 26), to which the individual goods (12) can be passed on and can be moved parallel to the direction of the back and forth movement of the two bridge conveyor systems (24, 26) to one end (38) of the two horizontal transport lines (34) and can be conveyed further from there;
wherein the contact surfaces of the collective load carriers (16) or the top side of the goods (12) of the layer of goods (12) situated immediately under the top layer and the contact surfaces of the at least two bridge conveyor systems (24, 26) coincide in one layer with at least one end (39) associated with the at least two vertically running transport lines (22) in such a way that the goods (12) can be manually shifted from the top side of the top layer of the goods (12) or from the contact surfaces of the collective load carriers (16) onto the contact surfaces of the at least two bridge conveyor systems (24, 26) by an operator (40) assigned to each of the two bridge conveyor systems (24, 26).

2. Arrangement according to claim 1, **characterised in that** the contact surfaces of the collective load carriers (16) or the top side of the goods (12) of the layer of goods (12) situated immediately under the top layer, the contact surfaces of the two bridge conveyor systems (24, 26) and the contact surfaces of the two horizontal transport lines (34) coincide in a - in particular horizontal - layer, in such a way that the goods (12) can be manually shifted from the top side of the top layer of the goods (12) or from the contact surfaces of the collective load carriers (16) across the contact surfaces of the at least two bridge conveyor systems (24, 26) onto the contact surfaces of the two horizontal transport lines (34) by an operator (40) assigned to each of the two bridge conveyor systems (24, 26).

3. Arrangement for the manual stacking of goods (12), in particular of cuboid piece goods such as containers, boxes or (beverage) crates, comprising
an outgoing goods end (18) to deliver collective load carriers (16) loaded with the goods (12);
at least two vertical or essentially vertically running transport lines (22), which are upstream of the outgoing goods end (18), along which the collective load carriers (16) loaded with the goods (12) can be moved vertically downwards;
at least two bridge conveyor systems (24, 26), which are upstream of the at least two vertical or essentially vertically running transport lines (22), from which the goods (12) to be loaded can be taken over, wherein the at least two bridge conveyor systems (24, 26) are arranged on opposite sides (28, 28') of the at least two vertical transport lines (22) and can be moved back and forth on the at least two bridge conveyor systems (24, 26) between the corresponding same sides (28, 28') of the at least two vertical transport lines (22) across the full width of the sides (28, 28') of the at least two vertical transport lines (22) perpendicularly to the flow of the goods (12);
two horizontal or essentially horizontally running transport lines (34), which are upstream of the bridge conveyor systems (24, 26) and arranged perpendicularly to the flow of the goods (12) on the two bridge conveyor systems (24, 26), from which the goods (12) to be loaded can be moved parallel to the direction of the back and forth movement of the two bridge conveyor systems (24, 26) to the at least two bridge conveyor systems (24, 26) and can be passed on to the bridge conveyor systems (24, 26);
wherein the contact surfaces of the collective load carriers (16) or the top side of the goods (12) of the layer of goods (12) situated immediately under the top layer and the contact surfaces of the at least two bridge conveyor systems (24, 26) coincide in one layer with at least one end (39) associated with the at least two vertically running transport lines (22) in such a way that the goods (12) can be manually shifted from the contact surfaces of the at least two bridge conveyor systems (24, 26) onto the contact surfaces of the collective load carriers (16) or onto the top side of the top layer of the goods (12) by an operator (40) assigned to each of the two bridge conveyor systems (24, 26) .

4. Arrangement according to claim 3, **characterised in that** the contact surfaces of the collective load carriers (16) or the top side of the goods (12) of the layer of goods (12) situated immediately under the top layer, the contact surfaces of the two bridge conveyor systems (24, 26) and the contact surfaces of the two horizontal transport lines (34) coincide in a - in particular horizontal - layer, in such a way that the goods (12) can be manually shifted from the contact surfaces of the two horizontal transport lines (34) across the contact surfaces of the at least two bridge conveyor systems (24, 26) onto the contact surfaces of the collective load carriers (16) or onto the top side of the top layer of the goods (12) by an operator (40) assigned to each of the two bridge conveyor systems (24, 26).

5. Arrangement according to any of the claims 1 to 4, **characterised in that** the at least two bridge conveyor systems (24, 26) can be shifted manually back and forth and/or moved back and forth by a motor between the corresponding sides (28, 28') of the at least two vertical transport lines (22) perpendicularly to the flow of the goods (12).

6. Arrangement according to any of the claims 1 to 5, **characterised in that** the at least two bridge conveyor systems (24, 26) and/or the at least two horizontal transport lines (34) are designed in a height-adjustable way.

7. Arrangement according to any of the claims 1 to 6, **characterised in that** the at least two bridge conveyor systems (24, 26) and the at least two horizontal transport lines (34) are associated with a floor (42) that is at least partially designed in a height-adjustable way relative to the contact surfaces of the at least two bridge conveyor systems (24, 26) and of the at least two horizontal transport lines (34) .

8. Arrangement according to claim 7, **characterised in that** the floor (42) is split into at least two parts, wherein separate floor elements are designed in a height-adjustable way relative to each other.

9. Arrangement according to any of the claims 1 to 8, **characterised in that** the at least two bridge conveyor systems (24, 26) and/or the at least two horizontal transport lines (34) have contact surfaces formed by rollers (44), by small rollers, by ball casters or by multi-directional rollers.

10. Arrangement according to any of the claims 1 to 9, **characterised in that** the at least two bridge conveyor systems (24, 26) and/or the at least two horizontal transport lines (34) comprise at least partially motor-driven contact surfaces.

11. Arrangement according to any of the claims 1 to 10, **characterised in that** the two horizontal transport lines (34) are associated with a goods turning system (46) and/or a centring system to align the goods (12) for further conveying.

12. Arrangement according to any of the claims 1 to 11, **characterised in that** the lifting speed or the lifting cycle of the vertical or essentially vertically running transport lines (22) can be adjusted, in particular controlled or varied, depending on the height of the layers of the goods (12) and of the number of the goods (12) of a layer of the goods (12) of a collective load carrier (16).

## Revendications

1. Agencement destiné à désempiler manuellement des marchandises (12), en particulier des marchandises de détail en forme parallélépipédique, telles que des conteneurs, des cartons ou des caisses (de boissons), comprenant
une extrémité (14) côté entrée de marchandises pour recevoir des supports de groupage (16) munis des marchandises (12), au moins deux voies de transport (22) agencées en aval de l'extrémité (18) côté entrée des marchandises et s'étendant verticalement ou sensiblement verticalement, qui permettent de déplacer verticalement vers le haut les supports de groupage (16) munis des marchandises (12),
au moins deux organes de convoyage à pont (24, 26) agencés en aval desdites au moins deux voies de transport (22) s'étendant verticalement ou sensiblement verticalement, organes qui permettant de remettre les marchandises individualisées (12),
dans lequel lesdits au moins deux organes de convoyage à pont (24, 26) sont agencés sur des côtés (28, 28') opposés l'un à l'autre desdites au moins deux voies de transport verticales (22) et sont mobiles en va-et-vient entre les côtés égaux mutuellement correspondants (28, 28') desdites au moins deux voies de transport verticales (22) sur toute la largeur des côtés (28, 28') desdites au moins deux voies de transport verticales (22) perpendiculairement au flux des marchandises (12) sur lesdits au moins deux organes de convoyage à pont (24, 26),
deux voies de transport (34) agencées en aval des organes de convoyage à pont (24, 26), agencées perpendiculairement au flux des marchandises (12) sur les deux organes de convoyage à pont (24, 26) et s'étendant horizontalement ou sensiblement horizontalement, voies auxquelles les marchandises individualisées (12) peuvent être remises et qui sont mobiles parallèlement à la direction du mouvement en va-et-vient des deux organes de convoyage à pont (24, 26) vers une extrémité (38) des deux voies de transport horizontales (34) et qui peuvent être réacheminées depuis ici,
dans lequel les surfaces d'appui des supports de groupage (16) ou la face supérieure des marchandises (12) de la couche de marchandises (12) située directement au-dessous de la couche la plus haute, et les surfaces d'appui desdits au moins deux organes de convoyage à pont (24, 26) coïncident avec au moins une extrémité (39) associée auxdites au moins deux voies de transport verticales (22) dans un plan, de telle sorte que les marchandises (12) de la face supérieure de la couche la plus haute des marchandises (12) ou des surfaces d'appui des supports de groupage (16) sont déplaçables manuellement sur les surfaces d'appui desdits au moins deux organes de convoyage à pont (24, 26) par un opérateur (40) affecté à chacun des deux dispositifs de convoyage à pont (24, 26).

2. Agencement selon la revendication 1, **caractérisé en ce que** les surfaces d'appui des supports de groupage (16) ou la face supérieure des marchandises (12) de la couche de marchandises (12) situées directement au-dessous de la couche la plus haute, les surfaces d'appui des deux organes de convoyage à pont (24, 26) et les surfaces d'appui des deux voies de transport horizontales (34) coïncident dans un plan en particulier horizontal, de telle sorte que les marchandises (12) de la face supérieure de la couche de marchandises (12) la plus haute ou des surfaces d'appui des supports de groupage (16) sont déplaçables manuellement via les surfaces d'appui desdits au moins deux organes de convoyage à pont (24, 26) jusque sur les surfaces d'appui des deux voies de transport horizontales (34) par un opérateur (40) affecté à chacun des deux organes de convoyage à pont (24, 26).

3. Agencement destiné à empiler manuellement des marchandises (12),
en particulier des marchandises de détail en forme parallélépipédique, telles que des conteneurs, des cartons ou des caisses (de boissons), comprenant
une extrémité (18) côté sortie de marchandises pour remettre des supports de groupage (16) munis des marchandises (12), au moins deux voies de transport (22) agencées en amont de l'extrémité (18) côté sortie des marchandises et s'étendant verticalement ou sensiblement verticalement, qui permettent de déplacer verticalement vers le bas les supports de groupage (16) munis des marchandises (12),
au moins deux organes de convoyage à pont (24, 26) agencés en amont desdites au moins deux voies de transport (22) s'étendant verticalement ou sensiblement verticalement, organes qui permettent de reprendre les marchandises à équiper (12),
dans lequel lesdits au moins deux organes de convoyage à pont (24, 26) sont agencés sur des côtés (28, 28') opposés l'un à l'autre desdites au moins deux voies de transport verticales (22) et sont mobiles en va-et-vient entre les côtés égaux mutuellement correspondants (28, 28') desdites au moins deux voies de transport verticales (22) sur toute la largeur des côtés (28, 28') desdites au moins deux voies de transport verticales (22) perpendiculairement au flux des marchandises (12) sur lesdits au moins deux organes de convoyage à pont (24, 26),
deux voies de transport (34) agencées en amont des organes de convoyage à pont (24, 26), agencées perpendiculairement au flux des marchandises (12) sur les deux organes de convoyage à pont (24, 26) et s'étendant horizontalement ou sensiblement horizontalement, voies depuis lesquelles les marchandises à charger (12) peuvent être déplacées parallèlement à la direction du mouvement en va-et-vient des deux organes de convoyage à pont (24, 26) vers lesdits au moins deux organes de convoyage à pont (24, 26) et peuvent être remises aux organes de convoyage à pont (24, 26),
dans lequel les surfaces d'appui des supports de groupage (16) ou la face supérieure des marchandises (12) de la couche de marchandises (12) située directement au-dessous de la couche la plus haute, et les surfaces d'appui desdits au moins deux organes de convoyage à pont (24, 26) coïncident avec au moins une extrémité (39) associée auxdites au moins deux voies de transport verticales (22) dans un plan, de telle sorte que les marchandises (12) peuvent être déplacées manuellement depuis les surfaces d'appui desdits au moins deux organes de convoyage à pont (24, 26) sur les surfaces d'appui des support de groupage (16) ou sur la face supérieure de la couche la plus haute des marchandises (12) par un opérateur (40) affecté à chacun des deux organes de convoyage à pont (24, 26).

4. Agencement selon la revendication 3, **caractérisé en ce que** les surfaces d'appui des supports de groupage (16) ou la face supérieure des marchandises (12) de la couche de marchandises (12) située directement au-dessous de la couche la plus haute, les surfaces d'appui des deux organes de convoyage à pont (24, 26) et les surfaces d'appui des deux voies de transport horizontales (34) coïncident dans un plan en particulier horizontal de telle sorte que les marchandises (12) des surfaces d'appui des deux voies de transport horizontales (34) sont déplaçables manuellement via les surfaces d'appui desdits au moins deux organes de convoyage à pont (24, 26) sur les surfaces d'appui des supports de groupage (16) ou sur la face supérieure de la couche la plus haute des marchandises (12) par un opérateur (40) affecté à chacun des deux organes de convoyage à pont (24, 26).

5. Agencement selon l'une des revendications 1 à 4, **caractérisé en ce que** lesdits au moins deux organes de convoyage à pont (24, 26) sont déplaçables en va-et-vient manuellement et/ou par voie motorisée entre les côtés correspondants (28, 28') desdites au moins deux voies de transport verticales (22) perpendiculairement au flux des marchandises (12).

6. Agencement selon l'une des revendications 1 à 5, **caractérisé en ce que** lesdits au moins deux organes de convoyage à pont (24, 26) et/ou lesdites au moins deux voies de transport horizontales (34) sont réalisées de façon réglable en hauteur.

7. Agencement selon l'une des revendications 1 à 6, **caractérisé en ce qu'**un plancher (42) est associé auxdits au moins deux organes de convoyage à pont (24, 26) et auxdites au moins deux voies de transport horizontales (34), plancher qui est réalisé de façon réglable en hauteur au moins partiellement par rapport aux surfaces d'appui desdits au moins deux organes de convoyage à pont (24, 26) et desdites au moins deux voies de transport (34).

8. Agencement selon la revendication 7, **caractérisé en ce que** le plancher (42) est réalisé en au moins deux parties, des éléments de plancher séparés étant réalisés de façon réglable en hauteur l'un par rapport à l'autre.

9. Agencement selon l'une des revendications 1 à 8, **caractérisé en ce que** lesdits au moins deux organes de convoyage à pont (24, 26) et/ou lesdites au moins deux voies de transport horizontales (34) présentent des surfaces d'appui formées par des rouleaux (44), des galets, des galets sphériques ou des galets omnidirectionnels.

10. Agencement selon l'une des revendications 1 à 9, **caractérisé en ce que** lesdits au moins deux organes de convoyage à pont (24, 26) et/ou lesdites au moins deux voies de transport horizontales (34) présentent des surfaces d'appui au moins partiellement entraînées par moteur.

11. Agencement selon l'une des revendications 1 à 10, **caractérisé en ce qu'**aux deux voies de transport horizontales (34) est associé un moyen d'inversion de marchandises (46) et/ou un dispositif de centrage pour orienter les marchandises (12) pour leur réacheminement.

12. Agencement selon l'une des revendications 1 à 11, **caractérisé en ce que** la vitesse de levage ou le cycle de levage des voies de transport (22) s'étendant verticalement ou sensiblement verticalement est réglable, en particulier pilotable ou régulable, en fonction de la hauteur des couches des marchandises (12) et du nombre de marchandises (12) d'une couche de marchandises (12) d'un support de groupage (16).
